# EUROPEAN PATENT APPLICATION

(11) **EP 1 249 534 A1**
(43) Date of publication of application: **16.10.2002**
(21) Application number: 01400965.8
(22) Date of filing: 13.04.2001
(51) Int. Cl.: D21H 27/40, B31F 1/20, B32B 29/08, D21H 19/36

(54) **Prevention of show through on linerboard**

(71) Applicant: WESTVACO CORPORATION, New York New York 10171 (US)
(72) Inventor: Bryden, Michelle D., Ellicott City, Maryland 21042 (US)
(74) Representative: Portal, Gérard

(57) **Abstract**

An outer surface coating for the printing of high quality graphics is applied to a paperboard substrate to provide a linerboard component suitable for use in the manufacture of lightweight small flute corrugated products, and an inner surface coating is applied to the inner surface of the substrate to seal the inner surface. Sealing the inner surface effectively prevents show through on the outer printable surface where the flute tips of a corrugated component are adhered to the inner surface of the linerboard component.

## Description

### Background of Invention

The present invention relates generally to corrugated packaging materials. More particularly, the invention relates to a method and means for preventing flute show through on the outer surface of the linerboard sheet or sheets of corrugated paperboard products where the flute tips of the corrugated medium are adhered to the linerboard.

In the manufacture of corrugated paperboard packaging material, a composite structure is produced by adhering one or more linerboard sheets to one or more corrugated or fluted medium sheets. Single faced corrugated paperboard is made by adhering the flute tips of a single corrugated medium sheet to a single flat linerboard sheet. Single wall corrugated paperboard (also known as double faced corrugated), is made by adhering a flat linerboard sheet to each side of a corrugated medium sheet. Likewise, double wall corrugated has two corrugated members and three liner-board sheets and triple wall corrugated uses seven sheets of paperboard, three medium and four linerboard. In each instance, however, there is always at least one surface of a linerboard sheet exposed, where the flute tips of the corrugated medium could show through. This show through creates an aesthetically unpleasant appearance when used as the exterior of a package fabricated from the corrugated product. The effect is excaberated depending upon the fluted medium used, the type of paperboard employed for the liner-board sheet and the type and application level of adhesive. As an example, the linerboard sheet may be bleached or unbleached paperboard. It may vary in basis weight kg/306.57 m² (lbs/ream), or caliper, i.e. points or thousandths of an inch. In addition, the fluted medium may vary in flute height and number per linear foot. These factors all have an impact, in one way or another, on the possibility of producing flute show through on the final product. While flute show through may not have been much of a problem for the typical unbleached corrugated boxes produced in the past, new opportunities for corrugated packaging have brought to the forefront problems heretofore not realized.

For example, miniflute packaging (E, F, and N flute), is a recently developed form of corrugated packaging material having graphic quality that is superior to conventional corrugated (A, B, and C flute), while still achieving relatively high strength. The majority of the linerboard sheets used in this new market is substantially the same as used in conventional corrugated products, 0.254 to 0.356 mm (10 to 14 point sheets). However, in the belief that substantial strength could still be achieved with lighter weight linerboard material, a project was started to replace the conventionally used linerboard sheets with lighter weight 0.127 to 0.178 mm (5 to 7 point sheets), made from bleached paper products with enhanced graphic quality. As a result, one negative aspect associated with the use of a lighter weight linerboard sheet was found to be the presence of flute show through, or a washboarding effect, on the outer surface of the linerboard, where the flute tips were adhered to the inner surface of the linerboard sheet. The present invention was developed to overcome the show through problem.

### Summary of Invention

In an effort to overcome flute show through problems with light weight linerboard sheet material, it was determined that the adhesive application level, and particularly, the water in the adhesive was a major factor in producing show through. Lamination pressure and other mechanical treatments were deemed to have only a small effect on show through. It was determined that the washboarding effect, or flute show through, was caused primarily by expansion and curl of the linerboard sheet in the vicinity of the flutes upon the absorption of water from the adhesive. An attempt to cure the problem by increasing the degree of sizing, or water repellency, of the linerboard sheet was ineffective because the amount of water required to cause show through is minimal (equivalent to a water Cobb value of less than 10). It was thus concluded that any reduction in washboarding or flute show through must be accomplished by reducing the tendency of the sheet to curl or by applying a water resistant film to the uncoated side of the C1S (coated one side) linerboard sheet. This solution introduced the secondary problem of possible adverse effects on the glueability of the flute tips of the corrugated medium to the linerboard sheet. Nevertheless, by applying a specially designed coating to the uncoated side of a C1S linerboard web, before adhering the flute tips of a corrugated medium web to the linerboard web, washboarding or flute show through was effectively reduced.

It is known in the corrugating art to apply coatings to the linerboard or medium webs for various reasons. For example, in United States Patents Nos. 3,849,224 and 4,202,723, both the corrugated medium web and the linerboard web are coated with a plastic material which serves as the adhesive component of the corrugated product. Other United States patents disclose various coatings applied to paperboard used for packaging, or as a component of a corrugated paperboard product for various reasons as disclosed, for example, in 3,086,884; 3,210,211; 3,619,342; 3,911,191; 5,242,545; and 5,292,391. However none of these patents address the specific problem solved by the invention as disclosed herein.

Indeed, in a first aspect, the invention proposes a laminated product comprising at least one linerboard component prepared from a lightweight 0.127 - 0.178 mm (5-7 point) bleached papersheet having inner and outer surfaces and a fluted medium component having flute tips adhesively bonded to the inner surface of the linerboard component, means for reducing show through of the flute tips on the outer surface of the linerboard component comprising a coating applied to the inner surface of the linerboard component before the components are bonded together for sealing the inner surface of linerboard component to prevent water from the adhesive from entering the pores of the linerboard component.

According to a first feature of the laminated product of the invention, the coating applied to the inner surface of the linerboard component comprises by weight 100 parts pigment, 50-200 parts binder, 0-5 parts starch and 0-3 parts calcium stearate.

Preferably the pigment in the coating is selected from the group consisting of clay and calcium carbonate.

In the same manner, preferably the binder in the coating is selected from the group consisting of styrene butadiene copolymer, polyvinyl acetate, acrylic and polyvinylidene chloride.

In a preferred embodiment, the coating components are dispersed in water at a solids content of from about 50-60%.

In a more particularly preferred embodiment of the laminated product of the invention, the coating is applied to the inner surface of the linerboard component at a coat weight of about 0.81 - 2.72 kg/306.57 m² (2-6 lbs/ream) (ream size 3300 ft²).

In a second aspect, the invention proposes a method of substantially preventing any show through of the flute tips of a corrugated medium component on the outer surface of a laminated product consisting essentially of at least one linerboard component and a corrugated medium component, wherein the flute tips of the corrugated medium component are adhesively bonded to the inner surface of the linerboard component, the improvement wherein the inner surface of the linerboard component is coated with a coating which seals the inner surface of the linerboard component before the two components are adhesively bonded together.

Preferably, in the method of the second aspect of the invention, the coating is applied to the inner surface of the linerboard component at a solids content of from about 50-60%, at a coat weight of from about 0.81 - 2.72 kg/306.57 m² (2-6 lbs/ream) (ream size 3300 ft²).

In a preferred embodiment of the method of the second aspect of the invention, the coating comprises by weight 100 parts pigment, 50-200 parts binder, 0-5 parts starch and 0-3 parts calcium stearate.

In this case, preferably, the pigment is selected from the group consisting of clay and calcium carbonate and the binder is selected from the group consisting of styrene butadiene copolymer, polyvinyl acetate, acrylic and polyvinylidene chloride.

In a third aspect, the invention also proposes a paperboard substrate suitable for use as a linerboard component in the manufacture of lightweight, small flute corrugated products comprises two surfaces, a lightweight 0.127 - 0.178 mm (5-7 point) bleached papersheet having a coating applied to one surface of the linerboard component suitable for printing high quality graphics and an inner surface coating applied to the other surface of the linerboard component suitable for sealing the inner surface, said inner surface coating serving to prevent show through on the outer surface where the flute tips of a corrugated component are adhesively bonded to the inner surface of the linerboard component.

Preferably, in the paperboard substrate of the third aspect of the invention, the inner surface coating comprises by weight, 100 parts pigment, 50-200 parts binder, 0-5 parts starch and 0-3 parts calcium stearate.

More preferably, in the paperboard substrate of the third aspect of the invention, the inner surface coating is applied to the substrate at a solids content of from about 50-60%, at a coat weight of from about 0.81 - 2.72/ 306.57 m² (2-6 lbs/ream) (ream size 3300 ft²).

In a preferred embodiment of the paperboard substrate of the third aspect of the invention, the pigment in the inner surface coating is selected from the group consisting of clay and calcium carbonate, and the binder is selected from the group consisting of styrene butadiene copolymer, polyvinyl acetate, acrylic and polyvinylidene chloride.

Furthermore, in a fourth aspect the invention proposes a method for preventing show through of the flute tips of a corrugated medium component on the outer printed surface of a linerboard component in a corrugated paperboard product comprising:
(a) applying a coating suitable for printing graphics to the outer surface of a lightweight 0.127 - 0.178 mm (5-7 point), bleached paper sheet for use as the linerboard component;
(b) applying to the inner surface of the linerboard component an aqueous coating comprising by weight 100 parts pigment, 50-200 parts binder, 0-5 parts starch and 0-3 parts calcium stearate at a solids content of from about 50-60%;
(c) drying the coating of step (b) to seal the inner surface of the linerboard component; and,
(d) adhesively bonding the flute tips of a corrugated medium component to the inner surface of the linerboard component wherein the coating of step (b) prevents water from the bonding adhesive from entering the pores of the linerboard component which could produce show through of the flute tips on the outer surface of the linerboard component.

### Detailed Description

The method and process of the present invention is established in accordance with the following Examples. It will be understood, however, that the Examples are illustrative only, and should not present any limitation on the practice of the invention, since various modifications may be made in the invention substantially within the scope of the appended claims.

### Example I

Several potential backside coatings for a lightweight C1S sheet were evaluated for prevention of washboarding or flute show through in small flute lamination. The formulations and coat weights are set forth in Tables 1-3. Several materials were investigated as potential coatings, including, polyvinyl acetate (PVAc), styrene-butadiene latex (SBR), acrylic latex, and polyvinylidene chloride (PVDC). The coatings were applied in laboratory drawdowns to the uncoated side of several C1S substrates both neat, and in coatings containing pigment. After drying, some of the samples were calendered and the sheets were tested on a Potdevin laminator with an aqueous PVAC adhesive to evaluate show through and bond strength. The laminates prepared were analyzed using a stylus instrument to determine surface profiles, and washboarding intensity as determined by the intensity of the fluted frequency. As will be seen from the data in the Tables, a 0.91 - 1.83 kg/306.57 m² (2-4 lbs/ream, ream size 3300 ft²) backside coating, containing very high binder levels (more binder than clay), is an effective means for reducing washboarding. Among the binders tested, styrene butadiene latex (Dow 638) gave the best results at the lowest cost. When binder was applied neat, an acrylic latex (DP 7505-83) was the most effective in reducing washboarding. The results of the evaluation are shown in the following Tables.

**Table 1**

| 43.09 kg/306.57 m² (95 lb/ream) C1S Substrate (uncalendered - Adhesive 1.77 kg/0.093 m² (3.9 lb/MSF) | | | | |
|---|---|---|---|---|
| Backside Coating (% solids) | CW kg/306.57 m² (lb/ream) | BS | WI | Bekk Porosity (sec) |
| untreated (control) | - | ex | 8.5 | 476 |
| rewetted (control) | - | ex | 3.7 | 258 |
| 2:1 PVAC:Clay (60%) | 6.36 (14) | ex | 2.2 | 242 |
| 3:1 PVAC:Clay (57.1%) | 4.54 (10) | ex | 2.9 | 886 |
| 4:1 PVAC:Clay (55:6%) | 4.54 (10) | ex | 1.6 | 1473 |
| 5:1 PVAC:Clay (54.6%) | 4.54 (10) | ex | 0.90 | >2000 |
| 2:1 Rhoplex 376 | 4.54 (10) | ex, but took a | 1.5 | >2000 |
| (styrene-acrylic): | | long time | | |
| Clay (60%) | | to deve-lope | | |
| Serfene 2022 (PVDC) | <0.45 (<1) | fair to poor | 0.31 | 439 |
| Vapor-Seal 11 (acrylic) | <0.45 (<1) | complete delamination | -- | 649 |
| Duron 8550 (PVDC) | <0.45 (<1) | fair to poor | 1.6 | 447 |
| CW = Coat Weight | | | | |
| BS = Bond Strength | | | | |
| ex = excellent | | | | |
| WI = Washboarding Intensit | | | | |

**Table 2**

| 45.36 kg/306.57 m² (100 lb/ream) C1S Substrate Calendered - Adhesive 1.45 kg/0.093 m² (3.2 lb/MSF) | | | | |
|---|---|---|---|---|
| Backside Coating (%solids) | CW kg/306.57 m² (lb/ream) | BS | WI | Bekk Porosity (sec) |
| not calendered (control) | - | ex | 4.8 | 476 |
| 9:2 PVAc: Clay (57.3%) | 1.62 (4) | mixed | 3.5 | 425 |
| | 2.27 (5) | ex | 3.1 | 1171 |
| | 2.72 (6) | ex | 2.7 | 1194 |
| PVAc (50%) | 2.27 (5) | ex | 2.7 | 1093 |
| 2:1 SBR: Clay (59.2%) | 2.27 (5) | ex | 1.8 | >2000 |
| 9:9:2 PVAC: Acrylic: | 2.27 (5) | ex | 2.2 | >2000 |
| Clay (43.6%) | | | | |
| CW = Coat Weight | | | | |
| BS = Bond Strength | | | | |
| ex = excellent | | | | |
| WI = Washboarding Intensity | | | | |

**Table 3**

| 45.36 kg/306.57 m² (100 lb/ream) C1S Substrate calendered - Adhesive 1.22 kg/0.093 m² (2.7 lb/MSF) | | | | |
|---|---|---|---|---|
| Backside Coating (% solids) | CW kg/306.57 m² (lb/ream) | BS | WI | Bekk Porosity (sec) |
| wetted, dried and calendered PVAc (50.6%) | - | ex | 6.6 | 121 |
| | 0.81 (2) | ex | 3.9 | 472 |
| | 1.62 (4) | ex | 2.4 | 515 |
| 9:2 PVAc:Clay (56.8%) | 0.81 (2) | ex | 2.4 | 630 |
| | 1.62 (4) | ex | 1.1 | >2000 |
| Acrylic (DP 7505-83) (35.1%) | 0.81 (2) | ex | 1.3 | >2000 |
| | | | | |
| | 1.62 (4) | ex | 1.7 | >2000 |
| 2:1 Acrylic:Clay (49.5%) | 0.81 (2) | ex | 1.1 | >2000 |
| | 1.62 (4) | ex | 1.2 | >2000 |
| SBR (50.4%) | 0.81 (2) | ex | 1.7 | 1027 |
| 2:1 SBR:clay (59.4%) | 0.81 (2) | ex | 0.98 | >2000 |
| | 1.62 (4) | ex | 0.43 | >2000 |
| 9:2PVAc:calcium carbonate (56.9%) | 1.62 (4) | ex | 2.4 | >2000 |
| | | | | |
| | 1.62 (4) | ex | 2.5 | >2000 |
| CW = Coat Weight | | | | |
| BS = Bond Strength | | | | |
| ex = all samples excellent | | | | |
| WI = Washboarding Intensity | | | | |

The coatings studied are believed to prevent washboarding by sealing the otherwise uncoated surface of the C1S substrate so that the water from the adhesive cannot enter the pores of the linerboard sheet. The water from the adhesive produces washboarding by causing the linerboard sheet to expand and curl about the flutes of the corrugated medium.

### Example II

Based on the results in Example I, a second trial was conducted to determine the optimum ratio of styrene butadiene (SBR) latex to clay for preventing washboarding during small flute lamination. Coatings were applied to the backside of a 45.36 kg/278.7 m² (100 lb/ream) (ream size 3,300 ft²) matte finished C1S substrate using a blade coater. The finished sheets were supercalendered and then laminated to an E-flute medium using a Potdevin laminator with 1.45 kg/0.093 m² (2.3/lb MSF) dry adhesive. The washboarding intensity was measured on the stylus profilo-meter and set time was determined. The washboarding intensity of the supercalendered sheets increased as the amount of clay increased, ranging from 0.89 for the sheet with a 2:1 (SBR: clay) ratio to 2.3 for a 1:2 (SBR: clay) ratio. Meanwhile, washboarding increased with decreasing solids levels. This effect was attributed to either the lower solids coat weights applied at the lower solids content, or to increased penetration of the backside coating into the substrate at lower solids. None of the backside coated matte sheets had any visible washboarding. The results are shown in Table 4.

**Table 4**

| 45.46 kg/ 306.57 m²(100 lb/ream) C1S Substrate Adhesive 1.044 kg/ 0.093 m²(2.3 lb/MSF) | | | | | | | | |
|---|---|---|---|---|---|---|---|---|
| C | Clay (K) | SBR (D) | CS | S (%) | CW | F | AST | WI |
| none | - | - | - | | - | UC | 1.25 | 1.5 |
| | | | | | | SC | 1 | 3.0 |
| 1 | 100 | 200 | 3 | 60 | 4.5 | UC - | | 0.33 |
| | | | | | | SC | 4 | 0.89 |
| 2 | 100 | 100 | 1.5 | 60 | 4.9 | UC | 3.25 | 0.56 |
| | | | | | | SC | 3.5 | 1.0 |
| 3 | 100 | 50 | 0.75 | 60 | 4.5 | UC | 2 | 0.27 |
| | | | | | | SC | 2.5 | 2.3 |
| 4 | 100 | 200 | 0 | 60 | 4.5 | UC | 4 | 0.38 |
| | | | | | | SC | 4 | 1.1 |
| 5 | 100 | 200 | 3 | 50 | 3.7 | UC | 4.25 | 0.64 |
| | | | | | | SC | 2.75 | 2.7 |
| 6 | 100 | 200 | 3 | 55 | 4.0 | UC | 4.25 | 0.27 |
| | | | | | | SC | 4 | 1.1 |
| C = Coating | | | | | | | | |
| (K) = (Kaobrite) | | | | | | | | |
| (D) = (Dow 638) | | | | | | | | |
| CS = Calcium Stearate | | | | | | | | |
| S = Solids | | | | | | | | |
| F = Finishing | | | | | | | | |
| UC= Uncalendered | | | | | | | | |
| SC = Supercalendered | | | | | | | | |
| AST = Adhesive Set Time | | | | | | | | |
| WI = Washboarding Intensity | | | | | | | | |

From the above, it will be seen that washboarding, or flute tip show through in small flute lamination may be effectively reduced and in some cases substantially eliminated by coating the backside of the C1S linerboard sheets before lamination. Thus, from the foregoing it will be apparent that the method and product of the present invention is capable of providing a unique packaging material that could find use in the high end packaging field. Accordingly even though only a general description with several explicit examples has been disclosed, it will be apparent to those skilled in the art that certain modifications and innovations could be made without departing from the principles of the invention. Therefore, what is intended to be covered should be interpreted by the scope of the appended claims.

## Claims

1. A laminated product comprising at least one linerboard component prepared from a lightweight 0.127 - 0.178 mm (5-7 point) bleached papersheet having inner and outer surfaces and a fluted medium component having flute tips adhesively bonded to the inner surface of the linerboard component, means for reducing show through of the flute tips on the outer surface of the linerboard component comprising a coating applied to the inner surface of the linerboard component before the components are bonded together for sealing the inner surface of linerboard component to prevent water from the adhesive from entering the pores of the linerboard component.

2. The product of claim 1 wherein the coating applied to the inner surface of the linerboard component comprises by weight 100 parts pigment, 50-200 parts binder, 0-5 parts starch and 0-3 parts calcium stearate.

3. The product of claim 2 wherein the pigment in the coating is selected from the group consisting of clay and calcium carbonate.

4. The product of claim 2 or 3 wherein the binder in the coating is selected from the group consisting of styrene butadiene copolymer, polyvinyl acetate, acrylic and polyvinylidene chloride.

5. The product of anyone of claims 2 to 4 wherein the coating components are dispersed in water at a solids content of from about 50-60%.

6. The product of anyone of the claims 1 to 5 wherein the coating is applied to the inner surface of the linerboard component at a coat weight of about 0.81 - 2.72 kg/ 306.57 m² (2-6 lbs/ream) (ream size 3300 ft²).

7. A method of substantially preventing any show through of the flute tips of a corrugated medium component on the outer surface of a laminated product consisting essentially of at least one linerboard component and a corrugated medium component, wherein the flute tips of the corrugated medium component are adhesively bonded to the inner surface of the linerboard component, wherein the improvement is that the inner surface of the linerboard component is coated with a coating which seals the inner surface of the linerboard component before the two components are adhesively bonded together.

8. The method of claim 7 wherein the coating is applied to the inner surface of the linerboard component at a solids content of from about 50-60%, at a coat weight of from about 0.81 - 2.72 kg/306.57 m² (2-6 lbs/ream) (ream size 3300 ft²).

9. The method of claim 7 or 8 wherein the coating comprises by weight 100 parts pigment, 50-200 parts binder, 0-5 parts starch and 0-3 parts calcium stearate.

10. The method of claim 9 wherein the pigment is selected from the group consisting of clay and calcium carbonate and the binder is selected from the group consisting of styrene butadiene copolymer, polyvinyl acetate, acrylic and polyvinylidene chloride.

11. A paperboard substrate suitable for use as a linerboard component in the manufacture of lightweight, small flute corrugated products comprises two surfaces, a lightweight 0.127 - 0.178 mm (5-7 point) bleached papersheet having a coating applied to one surface of the linerboard component suitable for printing high quality graphics and an inner surface coating applied to the other surface of the linerboard component suitable for sealing the inner surface, said inner surface coating serving to prevent show through on the outer surface where the flute tips of a corrugated component are adhesively bonded to the inner surface of the linerboard component.

12. The paperboard substrate of claim 11 wherein the inner surface coating comprises by weight, 100 parts pigment, 50-200 parts binder, 0-5 parts starch and 0-3 parts calcium stearate.

13. The paperboard substrate of claim 11 or 12 wherein the inner surface coating is applied to the substrate at a solids content of from about 50-60%, at a coat weight of from about 0.81 - 2.72/ 306.57 m² (2-6 lbs/ream) (ream size 3300 ft²).

14. The paperboard substrate of claim 12 or 13 wherein the pigment in the inner surface coating is selected from the group consisting of clay and calcium carbonate, and the binder is selected from the group consisting of styrene butadiene copolymer, polyvinyl acetate, acrylic and polyvinylidene chloride.

15. A method for preventing show through of the flute tips of a corrugated medium component on the outer printed surface of a linerboard component in a corrugated paperboard product comprising:
(a) applying a coating suitable for printing graphics to the outer surface of a lightweight 0.127 - 0.178 mm (5-7 point), bleached paper sheet for use as the linerboard component;
(b) applying to the inner surface of the linerboard component an aqueous coating comprising by weight 100 parts pigment, 50-200 parts binder, 0-5 parts starch and 0-3 parts calcium stearate at a solids content of from about 50-60%;
(c) drying the coating of step (b) to seal the inner surface of the linerboard component; and,
(d) adhesively bonding the flute tips of a corrugated medium component to the inner surface of the linerboard component wherein the coating of step (b) prevents water from the bonding adhesive from entering the pores of the linerboard component which could produce show through of the flute tips on the outer surface of the linerboard component.
